# EUROPEAN PATENT SPECIFICATION

(11) **EP 4 603 354 B1**
(45) Date of publication and mention of the grant of the patent: **28.10.2026**
(21) Application number: 23877274.3
(22) Date of filing: 10.10.2023
(51) Int. Cl.: G05D 1/225, G05D 1/241, G05D 1/249, G05D 1/646

(54) **SYSTEM, SERVER, VEHICLE, AND METHOD**
SYSTEM, SERVER, FAHRZEUG UND VERFAHREN
SYSTÈME, SERVEUR, VÉHICULE ET PROCÉDÉ

(30) Priority: 14.10.2022 JP 2022165367; 06.10.2023 JP 2023174077
(43) Date of publication of application: 20.08.2025
(73) Proprietor: TOYOTA JIDOSHA KABUSHIKI KAISHA, Toyota-shi Aichi 471-8571 (JP)
(72) Inventor: IWAZAKI, Noritsugu, Toyota-shi, Aichi 471-8571 (JP); OKAMOTO, Yuki, Toyota-shi, Aichi 471-8571 (JP); YANG, Sen, Toyota-shi, Aichi 471-8571 (JP); KANOU, Takeshi, Toyota-shi, Aichi 471-8571 (JP); NAGASE, Hiroaki, Toyota-shi, Aichi 471-8571 (JP)
(74) Representative: J A Kemp LLP
(86) International application number: PCT/JP2023/036691
(87) International publication number: WO 2024/080271

(56) References cited:
- WO-A1-2020/259899
- JP-A- 2002 019 603
- JP-A- 2015 083 417
- JP-A- 2016 184 276
- JP-A- 2017 216 933
- JP-A- 2020 066 329
- JP-A- 2020 100 284
- US-A- 6 161 484
- SAPUTRA HENDRI MAJA: "Mechatronics implementation review of guided systems for public transportation (buses)", 15 October 2014 (2014-10-15), XP093311167, Retrieved from the Internet <URL:https://www.researchgate.net/publication/277610461_Mechatronics_implementation_review_of_guided_systems_for_public_transportation_buses> [retrieved on 20250904]

## Description

### FIELD

The present disclosure relates to a system, a server, a vehicle, and a method.

### BACKGROUND ART

Japanese Unexamined Patent Publication No. 2001-265438 is known as a conventional technical document related to a automatic driving system. Japanese Unexamined Patent Publication No. 2001-265438 discloses a technology in which map data including information on a guide guiding section and a travel route is stored in a storage device of a vehicle, and the vehicle is controlled so as not to deviate from the travel route.

US 6161484 A discloses a prior art transport installation with optical and mechanical guiding.

### CITATION LIST

### PATENT LITERATURE

Patent Document 1: Japanese Patent Application Publication No. 2001-265438. Patent Document 2 : US 6161484 A.

### SUMMARY

### PROBLEM TO BE SOLVED BY THE INVENTION

If map data is stored in a storage device of a vehicle like in the above-described conventional technique, information about a guide contained in the map data is required to be simplified in some cases. However, simplifying the information about the guide causes a risk that it will become difficult to perform guide following control properly for causing the vehicle to run in such a manner as to follow the guide.

The present disclosure is intended to provide a technique allowing guide following control to be performed properly.

### MEANS TO SOLVE THE PROBLEM

The present is feasible in the following aspects.
(1) According to a first aspect of the present disclosure, a system is provided. The system comprises: a position judging unit that makes a judgment whether a vehicle is present at a guide area including a guide having a recess-projection structure provided on a road surface, the position judging unit being configured to judge that the vehicle is not present at the guide area and to judge that the vehicle is present at the guide area; an abutment judging unit that makes a judgment whether a wheel of the vehicle abuts on an obstacle using detection result from a vehicle-mounted sensor mounted on the vehicle or using detection result from an external sensor located external to the vehicle; a direction judging unit that judges a guiding direction defined by the guide on the basis of a direction of a load from the guide received by the wheel of the vehicle; and a controller that controls running of the vehicle in response to result of the judgment by the position judging unit and result of the judgment by the abutment judging unit. When the position judging unit judges that the vehicle is not present at the guide area and the abutment judging unit judges that the wheel of the vehicle abuts on the obstacle, the controller performs first control for causing the vehicle to travel over the obstacle in such a manner as to follow a target track. When the position judging unit judges that the vehicle is present at the guide area and the abutment judging unit judges that the wheel of the vehicle abuts on the obstacle, the controller performs second control for causing the vehicle to run in such a manner as to use the obstacle as the guide and to travel along the guiding direction of the guide determined by the direction judging unit.

The system of this aspect allows the vehicle to run in such a manner as to follow the guide.

The system of this aspect allows the vehicle to run in such a manner as to follow the guide. When the guiding direction is different from the target track, the controller may correct the target track to follow the guiding direction, which makes it possible to reduce the occurrence of deviation of the vehicle from the guide during running.
(2) In the system of the above-described aspect, the position judging unit may judge whether the vehicle is present at the guide area using recognition result about a signboard corresponding to the guide area or a road marking corresponding to the guide area on the basis of an image captured by a front-facing camera of the vehicle. The system of this aspect makes it possible to easily judge whether the vehicle is present at the guide area.
(3) According to a second aspect of the present disclosure, a server is provided. The server comprises: a position judging unit that makes a judgment whether a vehicle is present at a guide area including a guide having a recess-projection structure provided on a road surface; an abutment judging unit that makes a judgment whether a wheel of the vehicle abuts on an obstacle using detection result from a vehicle-mounted sensor mounted on the vehicle or using detection result from an external sensor located external to the vehicle; and a remote controller that controls running of the vehicle in response to result of the judgment by the position judging unit and result of the judgment by the abutment judging unit. If the position judging unit judges that the vehicle is not present at the guide area and if the abutment judging unit judges that the wheel of the vehicle abuts on the obstacle, the remote controller performs first control for causing the vehicle to run in such a manner as to follow a target track or for stopping the vehicle. If the position judging unit judges that the vehicle is present at the guide area and if the abutment judging unit judges that the wheel of the vehicle abuts on the obstacle, the remote controller performs second control for causing the vehicle to run in such a manner as to follow the obstacle.

The server of this aspect allows the vehicle to run in such a manner as to follow the guide.

(4) According to a third aspect of the present disclosure, a vehicle is provided. The vehicle comprises: a position judging unit that makes a judgment whether the vehicle is present at a guide area including a guide having a recess-projection structure provided on a road surface; an abutment judging unit that makes a judgment whether a wheel of the vehicle abuts on an obstacle using detection result from a vehicle-mounted sensor mounted on the vehicle or using detection result from an external sensor located external to the vehicle; and a running controller that controls running of the vehicle in response to result of the judgment by the position judging unit and result of the judgment by the abutment judging unit. If the position judging unit judges that the vehicle is not present at the guide area and if the abutment judging unit judges that the wheel of the vehicle abuts on the obstacle, the running controller performs first control for causing the vehicle to run in such a manner as to follow a target track or for stopping the vehicle. If the position judging unit judges that the vehicle is present at the guide area and if the abutment judging unit judges that the wheel of the vehicle abuts on the obstacle, the running controller performs second control for causing the vehicle to run in such a manner as to follow the obstacle.

The vehicle of this aspect allows the vehicle to run in such a manner as to follow the guide.

(5) According to a fourth aspect of the present disclosure, a method is provided. The method comprises: a position judging step of making a judgment whether a vehicle is present at a guide area including a guide having a recess-projection structure provided on a road surface; an abutment judging step of making a judgment whether a wheel of the vehicle abuts on an obstacle using detection result from a vehicle-mounted sensor mounted on the vehicle or using detection result from an external sensor located external to the vehicle; and a controlling step of controlling running of the vehicle in response to result of the judgment by the position judging step and result of the judgment by the abutment judging step. If the vehicle is judged not to be present at the guide area in the position judging step and if the wheel of the vehicle is judged to abut on the obstacle in the abutment judging step, first control is performed in the controlling step for causing the vehicle to run in such a manner as to follow a target track or for stopping the vehicle. If the vehicle is judged to be present at the guide area in the position judging step and if the wheel of the vehicle is judged to abut on the obstacle in the abutment judging step, second control is performed in the controlling step for causing the vehicle to run in such a manner as to follow the obstacle.

The method of this aspect allows the vehicle to run in such a manner as to follow the guide.

The present disclosure is feasible in various aspects other than the system, the server, the vehicle, and the method. For example, the present disclosure may be realized in aspects including a computer program and a recording medium storing a computer program.

### BRIEF DESCRIPTION OF THE DRAWINGS

Fig. 1 is a conceptual view showing the configuration of a system according to a first embodiment;
Fig. 2 is an explanatory view showing a factory site;
Fig. 3 is an explanatory view showing the configuration of a vehicle according to the first embodiment;
Fig. 4 is an explanatory view showing the configuration of a server according to the first embodiment;
Fig. 5 is a flowchart showing a processing procedure of running control over the vehicle according to the first embodiment;
Fig. 6 is a flowchart showing a processing procedure of a position judgment;
Fig. 7 is a flowchart showing a processing procedure of within-guide-area control;
Fig. 8 is a flowchart showing a processing procedure of outside-guide-area control;
Fig. 9 is a conceptual view showing the configuration of a system according to a second embodiment;
Fig. 10 is an explanatory view showing the configuration of a vehicle according to the second embodiment;
Fig. 11 is a flowchart showing a processing procedure of running control over the vehicle according to the second embodiment; and
Fig. 12 is an explanatory view showing the configuration of a guiding part according to another embodiment.

### DETAILED DESCRIPTION

### A. First Embodiment

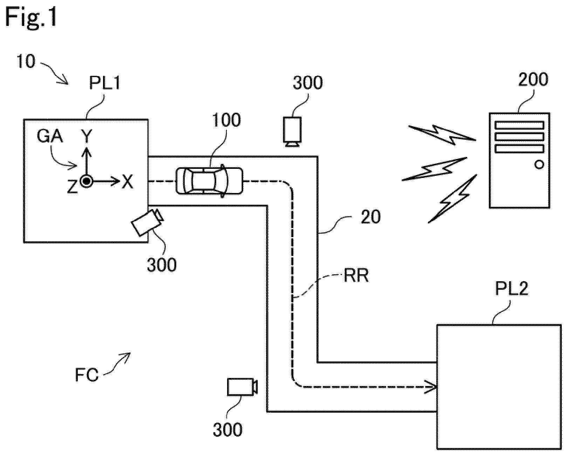

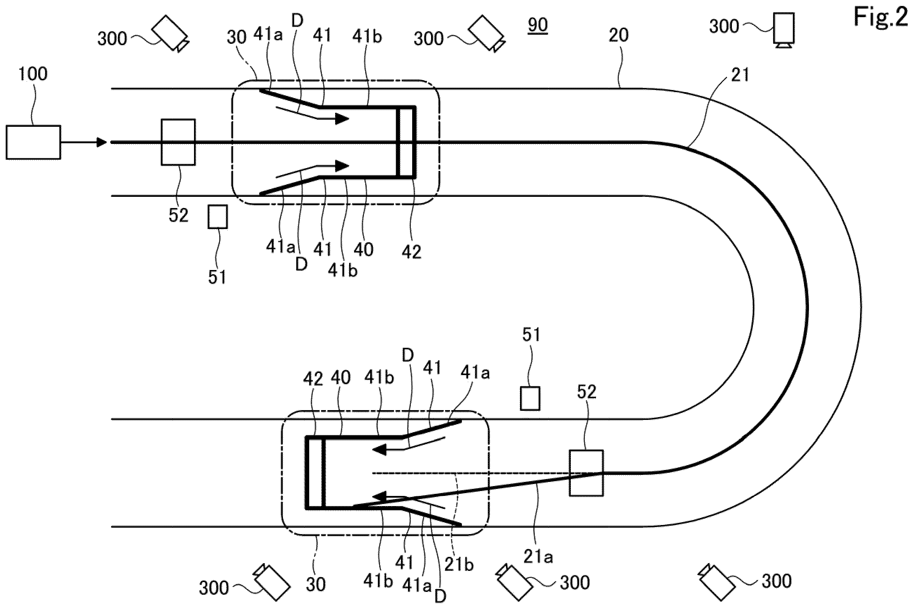

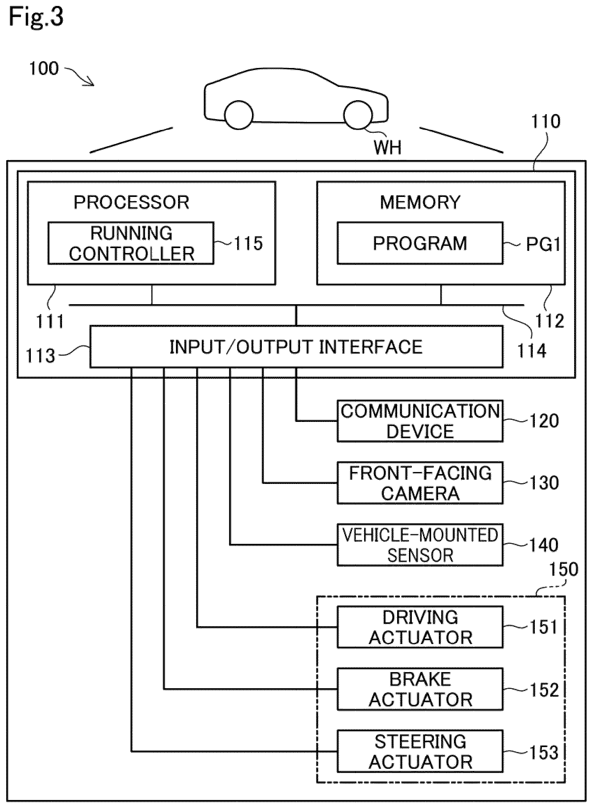

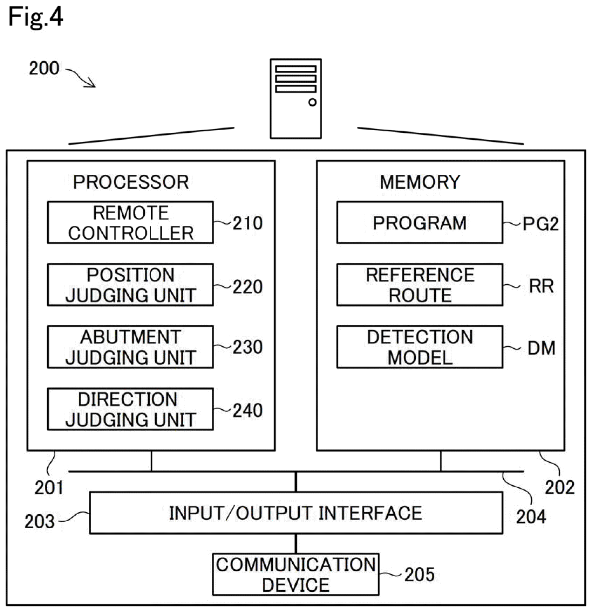

Fig. 1 is a conceptual view showing the configuration of a system 10 according to a first embodiment. Fig. 2 is an explanatory view showing a site 90 of a factory FC. Fig. 3 is an explanatory view showing the configuration of a vehicle 100. Fig. 4 is an explanatory view showing the configuration of a server 200. As shown in Fig. 1, in the present embodiment, the system 10 includes the vehicle 100, the server 200, and at least one external sensor 300.

The vehicle 100 is to run with a wheel WH. In the present embodiment, the wheel WH includes a caterpillar track. The vehicle 100 is a passenger car, a truck, a bus, a two-wheel vehicle, a four-wheel vehicle, a combat vehicle, or a vehicle for construction, for example. The vehicle 100 is a gasoline automobile, a hybrid automobile (HEV: hybrid electric vehicle), an electric automobile (BEV: battery electric vehicle), or a fuel cell automobile (FCEV: fuel cell electric vehicle), for example.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the system 10 is used in the factory FC for manufacture of the vehicle 100. A reference coordinate system of the factory FC is a global coordinate system GC. Specifically, an arbitrary position in the factory FC is expressed by X, Y, and Z coordinates in the global coordinate system GC. The factory FC includes a first place PL1 and a second place PL2. The first place PL1 and the second place PL2 are connected to each other via a road 20 on which the vehicle 100 is capable of running. The factory FC is provided with a plurality of the external sensors 300 installed along the road 20. The position of each of the external sensors 300 in the factory FC is adjusted in advance. The vehicle 100 moves by unmanned driving from the first place PL1 to the second place PL2 on the road 20.

The external sensor 300 is a sensor located external to the vehicle 100. In the present embodiment, the external sensor 300 is a sensor for acquiring the position and direction of the vehicle 100. More specifically, the external sensor 300 is composed of a camera. The camera as the external sensor 300 captures an image of the vehicle 100 moving on the road 20 and outputs a captured image as detection result. The external sensor 300 includes a communication device (not shown in the drawings), and is capable of communicating with another device such as the server 200 via wire communication or radio communication.

Fig. 2 shows an example of the site 90 of the factory FC. In the following description, the site 90 of the factory FC will be called a factory site 90. In the present embodiment, the factory FC is a factory for the manufacture of the vehicle 100. The factory FC is not limited to a factory for the manufacture of the vehicle 100 but may be a factory for the maintenance of the vehicle 100, for example.

The vehicle 100 runs on the road 20 in the factory site 90. The road 20 is a track along which the vehicle 100 is to run in the factory site 90. The road 20 is defined by white lines formed on a road surface, for example. The vehicle 100 runs along a target track 21 for automatic driving. The target track 21 is set in such a manner as to extend along the road 20. The target track 21 may be set erroneously in a direction of deviating from the center of the road 20 or from the road 20 due to sensor abnormality or other influences.

The factory site 90 includes a guide area 30. In the present embodiment, the factory site 90 includes a plurality of guide areas 30. The guide area 30 is an area in the road 20. The guide area 30 is provide with a guiding section 40. The guiding section 40 has an uneven structure provided on the road surface of the factory site 90. The guiding section 40 includes a pair of guide rails (guides) 41 and a guide hole 42.

The guide rail 41 is a protrusion formed on the road surface of the factory site 90. The pair of guide rails 41 are arranged in a width direction of the road 20 when viewed from a vertical direction. The guide rail 41 includes an inclined section 41a inclined with respect to the traveling direction of the road 20 and a parallel section 41b parallel to the traveling direction when viewed from the vertical direction. The width between the pair of inclined sections 41a gradually decreases as it advances in the traveling direction. The parallel section 41b is positioned on the wake flow side from the inclined section 41a in the traveling direction. The guide rail 41 guides the vehicle 100 along a guiding direction D. The guiding direction D is parallel to an extending direction of the guide rail 41 when viewed from the vertical direction.

The guide hole 42 is a recess formed on the road surface of the factory site 90. The guide hole 42 is positioned on the wake flow side from the guide rail 41 in the traveling direction of the road 20. The guide hole 42 extends along the width direction of the road 20 when viewed from the vertical direction. The guide hole 42 reaches the pair of parallel sections 41b.

The factory site 90 is provided with a signboard 51 or a road marking 52 corresponding to the guide area 30. The signboard 51 is provided right before the guide area 30 in the traveling direction of the road 20. That is, the vehicle 100 passes the signboard 51 then passes the guide area 30. The signboard 51 is provided outside the road 20, for example. On the signboard 51, for example, characters, symbols, or the like for recognizing the guide area 30 are displayed.

The road marking 52 is provided right before the guide area 30 in the traveling direction of the road 20. That is, the vehicle 100 passes the road marking 52 then passes the guide area 30. The road marking 52 is provided on the surface of the road 20, for example. The road marking 52 is, for example, characters, symbols, or the like for recognizing the guide area 30.

As shown in Fig. 3, the vehicle 100 includes an ECU 110 for controlling each unit of the vehicle 100, a communication device 120 for communicating with an external device such as the server 200 via radio communication, a vehicle-mounted sensor 140, and an actuator group 150 with at least one actuator to be driven under the control of the ECU 110. In the present embodiment, the actuator group 150 includes a driving actuator 151, a brake actuator 152, and a steering actuator 153.

In the present embodiment, the vehicle 100 further includes a front-facing camera 130. The front-facing camera 130 is provided in the vehicle interior of the vehicle 100. The front-facing camera 130 captures an image of a front view from the vehicle 100. The front-facing camera 130 transmits information about the captured image to the ECU 110. The information about the captured image is transmitted from the ECU 110 to the server 200 via the communication device 120. The vehicle 100 may not have to include the front-facing camera 130.

The vehicle-mounted sensor 140 is an internal sensor provided in the vehicle 100. The vehicle-mounted sensor 140 detects a running state of the vehicle 100. The vehicle-mounted sensor 140 includes a vehicle speed sensor, an acceleration sensor, a yaw rate sensor, a sensor for detecting a driving torque of the vehicle 100, and a sensor for detecting a steering torque of the vehicle 100, for example. The vehicle-mounted sensor 140 detects a driving torque of the vehicle 100, a steering torque of the vehicle 100, and others as a running state of the vehicle 100, for example. The vehicle-mounted sensor 140 transmits information about the running state of the vehicle 100 to the ECU 110. The information about the running state of the vehicle 100 is transmitted from the ECU 110 to the server 200 via the communication device 120.

The driving actuator 151 controls the driving force of the vehicle 100 in accordance with a control signal from the ECU 110. Specifically, the driving actuator 151 controls a supply amount of air to the engine (throttle opening) to control the driving force of the vehicle. When the vehicle is a hybrid electric vehicle (HEV), a control signal from the ECU 110 is input to a motor as a power source in addition to the supply amount of air to the engine, and the driving force is controlled. When the vehicle is a battery electric vehicle (BEV), a control signal from the ECU 110 is input to a motor as a power source to control the driving force. The motor as a power source in these cases constitutes the driving actuator 151.

The brake actuator 152 controls braking force of the vehicle 100 in accordance with a running control signal from the ECU 110. Specifically, the brake actuator 152 controls a brake system in accordance with a running control signal from the ECU 110 to control braking force to be applied to the wheels of the vehicle 100. As the brake system, for example, a hydraulic brake system may be used.

The steering actuator 153 controls a steering torque or a steering angle of the vehicle 100 in accordance with a running control signal from the ECU 110. Specifically, the steering actuator 153 controls driving of an assist motor that controls a steering torque or a steering angle in an electric power steering system in accordance with a running control signal from the ECU 110.

The ECU 110 is configured using a computer including a processor 111, a memory 112, an input/output interface 113, and an internal bus 114. The processor 111, the memory 112, and the input/output interface 113 are connected via the internal bus 114 in a manner allowing bidirectional communication therebetween. The communication device 120, the front-facing camera 130, the vehicle-mounted sensor 140, and each of the actuators 151 to 153 of the actuator group 150 are connected to the input/output interface 113. In the present embodiment, the processor 111 executes a computer program PG1 stored in advance in the memory 112 to function as a running controller 115.

The running controller 115 causes the vehicle 100 to run by controlling the actuator group 150. The running controller 115 is capable of causing the vehicle 100 to run by controlling the actuator group 150 using a running control signal received from the server 200. The running control signal is a control signal for causing the vehicle 100 to run. In the present embodiment, the running control signal includes an acceleration and a steering angle of the vehicle 100 as parameters. In other embodiments, the running control signal may include a speed of the vehicle 100 as a parameter instead of or in addition to an acceleration of the vehicle 100.

As shown in Fig. 4, the server 200 is configured using a computer including a processor 201, a memory 202, an input/output interface 203, and an internal bus 204. The processor 201, the memory 202, and the input/output interface 203 are connected via the internal bus 204 in a manner allowing bidirectional communication therebetween. A communication device 205 for communicating with each type of device external to the server 200 is connected to the input/output interface 203. The communication device 205 is capable of communicating with the vehicle 100 via radio communication and is capable of communicating with each external sensor 300 via wire communication or radio communication. The processor 201 executes a computer program PG2 stored in advance in the memory 202 to function as a remote controller 210, a position judging unit 220, an abutment judging unit 230, and a direction judging unit 240.

The remote controller 210 acquires positional information about the vehicle 100 using the external sensor 300, generates a running control signal for controlling the actuator group 150 of the vehicle 100 in response to the positional information about the vehicle 100, and transmits the running control signal to the vehicle 100, thereby causing the vehicle 100 to run by remote control. In addition to the running control signal, the remote controller 210 may generate and output a control signal for controlling an actuator for getting each type of auxiliary machine to work provided at the vehicle 100 or getting each type of equipment to work such as a wiper, a power window, a lamp, etc., for example. Specifically, the remote controller 210 may get such a type of equipment or such a type of auxiliary machine to work by remote control.

The position judging unit 220 judges whether the vehicle 100 is present at a guide area 30. "The vehicle present at the guide area" means that the vehicle 100 is present in the guide area 30 or in the vicinity of the guide area 30. In the present embodiment, guide area information showing a range of the guide area 30 is stored in advance in the memory 202. The position judging unit 220 judges whether the vehicle 100 is within the range of the guide area 30 on the basis of the guide area information and the positional information about the vehicle 100 acquired by the remote controller 210. The position judging unit 220 may judge that the vehicle 100 is present at the guide area 30 if the vehicle 100 is within the range of the guide area 30 or in the vicinity of the guide area 30.

In the embodiment where the vehicle 100 includes the front-facing camera 130, the position judging unit 220 may judge whether the vehicle 100 is present at the guide area 30 using recognition result about a signboard 51 or a road marking 52 on the basis of an image captured by the front-facing camera 130 of the vehicle 100. More specifically, if the size of a character, a symbol, or the like shown in the signboard 51 or the size of the road marking 52 is greater than a predetermined value in the captured image captured by the front-facing camera 130, the position judging unit 220 may judge that the vehicle 100 is present at the guide area 30. The position judging unit 220 recognizes the signboard 51 or the road marking 52 appearing in the captured image using a well-known image processing technique such as edge extraction, noise removal, pattern matching, or deep learning, for example.

The abutment judging unit 230 judges whether the wheel WH of the vehicle 100 abuts on an obstacle on the basis of detection result from the vehicle-mounted sensor 140. More specifically, if a difference of a driving torque of the vehicle 100, a steering torque of the vehicle 100, a driving torque of an assist motor, or the like and an assumed value is greater than a predetermined value, for example, the abutment judging unit 230 judges that the wheel WH abuts on the obstacle. In the embodiment where the vehicle 100 includes the front-facing camera 130, the abutment judging unit 230 may judge that the wheel WH abuts on the obstacle if a difference of the direction of the vehicle 100 and an assumed value is greater than a predetermined value in an image captured by the front-facing camera 130, for example. The abutment judging unit 230 judges that the wheel WH abuts on the obstacle if a difference of a vehicle speed, an acceleration, a yaw rate of the vehicle 100 or the like from an assumed value is greater than a predetermined value, for example. Each of the foregoing assumed values may be a preset value. Each of the foregoing assumed values is a value obtained by successively calculating torques on the basis of a vehicle state of the vehicle 100 in terms of a vehicle speed of the vehicle 100 or a rudder angle of the vehicle 100, for example, to be generated on the assumption that the vehicle 100 is running on a smooth road surface.

The direction judging unit 240 determines the guiding direction D of the guide rail 41 based on the direction of the load applied from the guide rail 41 to the wheel WH of the vehicle 100. Based on the current steering angle and the drive torque of the assist motor controlled by the electric power steering system, the direction judging unit 240 estimates the magnitude and direction of the disturbance torque generated because of the load applied from the guide rail 41 to the wheel WH. The direction judging unit 240 determines the guiding direction D based on the magnitude and direction of the disturbance torque.

The remote controller 210 controls the travel of the vehicle 100 based on result of the judgment by the position judging unit 220 and result of the judgment by the abutment judging unit 230 by remote control. Specifically, when the position judging unit 220 determines that the vehicle 100 is not located at the guide area 30 and the abutment judging unit 230 determines that the wheel WH of the vehicle 100 abuts on an obstacle, the remote controller 210 executes target track following control. In the target track following control, the remote controller 210 causes the vehicle 100 to travel in such a manner as to follow the target track 21 using an obstacle as disturbance. In the target track following control, the remote controller 210 causes the vehicle 100 to travel over an obstacle. In the target track following control, the remote controller 210 does not execute control of a steering angle for avoiding an obstacle.

When the position judging unit 220 determines that the vehicle 100 is located at the guide area 30 and the abutment judging unit 230 determines that the wheel WH of the vehicle 100 abuts on an obstacle, the remote controller 210 executes guide following control. In the guide following control, the remote controller 210 causes the vehicle 100 to travel in such a manner as to follow the guide rail 41 using the obstacle as the guide rail 41. In the guide following control, the remote controller 210 causes the vehicle 100 not to travel over the guide rail 41. In the guide following control, the remote controller 210 executes control of a steering angle for avoiding the guide rail 41.

In the guide following control, the remote controller 210 causes the vehicle 100 to travel along the guiding direction D of the guide rail 41 determined by the direction judging unit 240. The remote controller 210 changes the steering angle toward the guiding direction D determined by the direction judging unit 240. The remote controller 210 changes the steering angle in such a manner as to reduce the disturbance torque generated because of the load applied from the guide rail 41 to the wheel WH. The remote controller 210 continues to change the steering angle until the disturbance torque becomes equal to or less than a predetermined value. This causes the vehicle 100 to travel along the guiding direction D. The vehicle 100 may travel in a state where the wheel WH is in contact with the guide rail 41. When the wheel WH abuts on the guide hole 42, the remote controller 210 may temporarily stop the vehicle 100.

When the guiding direction D is different from the target track 21, the remote controller 210 corrects the target track 21 to follow the guiding direction D. The guiding direction being different from the target track means that, for example, an angle formed by the guiding direction and the target track is equal to or larger than a predetermined angle. The guiding direction being different from the target track may mean that the distance between the guide rail and the target track in the width direction of the road is equal to or larger than a predetermined distance. Each of the predetermined angle and the predetermined distance is not particularly limited, and any value may be set in advance. Each of the predetermined angle and the predetermined distance may be determined in advance based on, for example, the width of the vehicle, the width of the road, and the like.

As shown in Fig. 2, the target track 21 may include a deviating region 21a. The deviating region 21a is present in the guide area 30. The deviating region 21a is oblique to a traveling direction along the road 20. The deviating region 21a is oblique to a guiding direction D. The guiding direction D forms an angle together with the deviating region 21a that is equal to or greater than a predetermined angle. A distance between one guide rail 41 and the target track 21 is equal to or greater than a predetermined distance. Specifically, the deviating region 21a differs from the guiding direction D. Causing the vehicle 100 to run along the deviating region 21a causes a risk of deviation from the road 20. The remote controller 210 corrects the deviating region 21a to a corrected region 21b. The corrected region 21b extends in a direction substantially conforming to the guiding direction D.

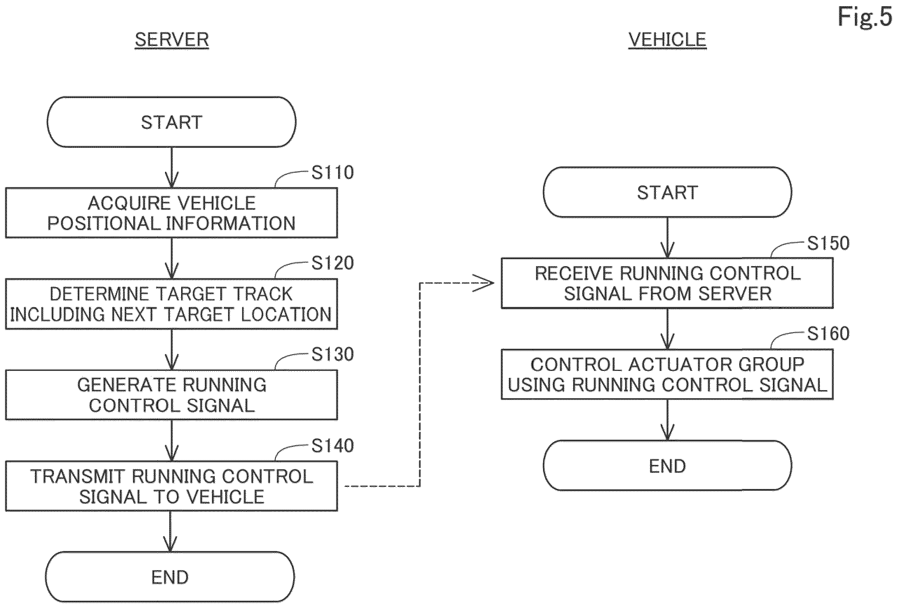

Fig. 5 is a flowchart showing a processing procedure of running control over the vehicle 100 according to the present embodiment. According to the processing procedure in Fig. 5, the processor 201 of the server 200 executes the computer program PG2 to function as the remote controller 210. The processor 111 of the vehicle 100 executes the computer program PG1 to function as the running controller 115.

In step S110, the remote controller 210 acquires vehicle location information of the vehicle 100 using detection result output from the external sensor 300. The vehicle location information is locational information as a basis for generating a running control signal. In the present embodiment, the vehicle location information includes the location and orientation of the vehicle 100 in the global coordinate system GC of the factory FC. More specifically, In step S110, the remote controller 210 acquires the vehicle location information using the captured image acquired from the camera as the external sensor 300.

More specifically, in step S110, the remote controller 210 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 10 or outside the system 10. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The remote controller 210 can acquire the orientation of the vehicle 100 through estimation based on the direction of a motion vector of the vehicle 100 detected from change in location of a feature point of the vehicle 100 between frames of the captured images using optical flow process, for example.

In step S120, the remote controller 210 determines a target location to which the vehicle 100 is to move next, and the target track 21 along which the vehicle 100 moves from its current location to the target location. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The remote controller 210 determines the target location to which the vehicle 100 is to move next using the vehicle location information and the reference route RR. The remote controller 210 determines the target location on the reference route RR ahead of a current location of the vehicle 100.

In step S130, the remote controller 210 generates a running control signal for causing the vehicle 100 to run toward the determined target location. The remote controller 210 calculates a running speed of the vehicle 100 from transition of the location of the vehicle 100 and makes comparison between the calculated running speed and a target speed of the vehicle 100 determined in advance. If the running speed is lower than the target speed, the remote controller 210 generally determines an acceleration in such a manner as to accelerate the vehicle 100. If the running speed is higher than the target speed as, the remote controller 210 generally determines an acceleration in such a manner as to decelerate the vehicle 100. If the vehicle 100 is on the reference route RR, the remote controller 210 determines a steering angle and an acceleration in such a manner as to prevent the vehicle 100 from deviating from the reference route RR. If the vehicle 100 is not on the reference route RR, in other words, if the vehicle 100 deviates from the reference route, the remote controller 210 determines a steering angle and an acceleration in such a manner as to return the vehicle 100 to the reference route RR.

In step S140, the remote controller 210 transmits the generated running control signal to the vehicle 100. The remote controller 210 repeats the acquisition of vehicle location information, the determination of a target location, the generation of a running control signal, the transmission of the running control signal, and others in a predetermined cycle.

In step S150, the running controller 115 receives the running control signal transmitted from the server 200. In step S160, the running controller 115 controls the actuator group 150 using the received running control signal, thereby causing the vehicle 100 to run at the acceleration and the steering angle indicated by the running control signal. The running controller 115 repeats the reception of a running control signal and the control over the actuator group 150 in a predetermined cycle. According to the system 10 in the present embodiment, it becomes possible to run the vehicle 100 by remote control, and it becomes possible to move the vehicle 100 without using a transport unit such as a crane or a conveyor.

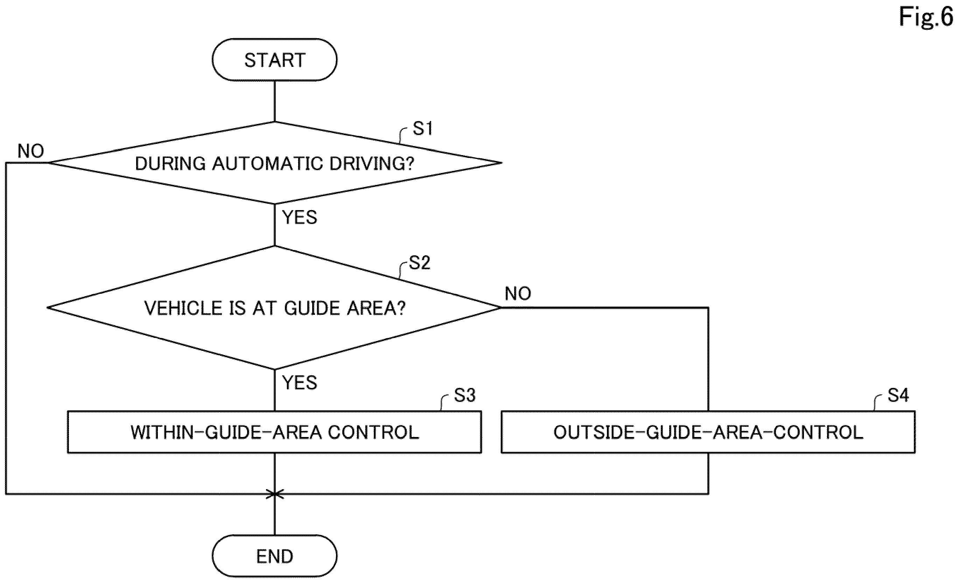

Fig. 6 is a flowchart showing a processing procedure of a position judgment made by the processor 201 of the server 200. In step 1, the processor 201 determines whether the vehicle 100 is in automatic driving. When it is determined that the vehicle 100 is in automatic driving (Step S1: YES), the processor 201 proceeds to Step S2. When it is determined that the vehicle 100 is not in automatic driving (Step S1: NO), the processor 201 ends processing of this time. In Step S2, the processor 201 determines whether the vehicle 100 is located at the guide area 30. When it is determined that the vehicle 100 is located at the guide area 30 (Step S2: YES), the processor 201 proceeds to Step S3. When it is determined that the vehicle 100 is not located at the guide area 30 (Step S2: NO), the processor 201 proceeds to Step S4. In Step S3, the processor 201 executes within-guide-area-control. In Step S4, the processor 201 executes outside-guide-area-control.

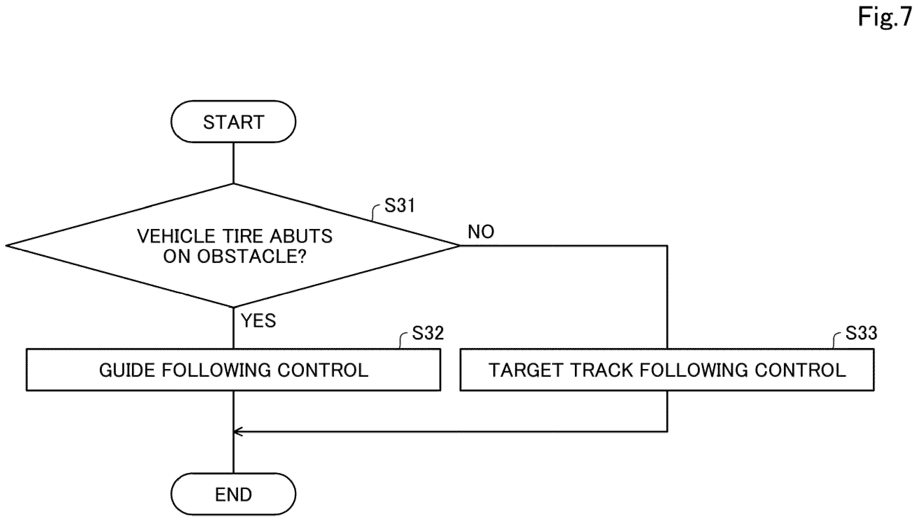

Fig. 7 is a flowchart showing a processing procedure of within-guide-area control. The processor 201 determines whether the wheel WH of the vehicle 100 abuts on an obstacle in Step S31. When it is determined that the wheel WH of the vehicle 100 abuts on an obstacle (Step S31: YES), the processor 201 proceeds to Step S32. When it is determined that the wheel WH of the vehicle 100 does not abut on an obstacle (Step S31: NO), the processor 201 proceeds to Step S33. In Step S32, the processor 201 executes guide following control. In Step S33, the processor 201 executes target track following control. The target track following control may be referred to as a first control, and the guide following control may be referred to as a second control.

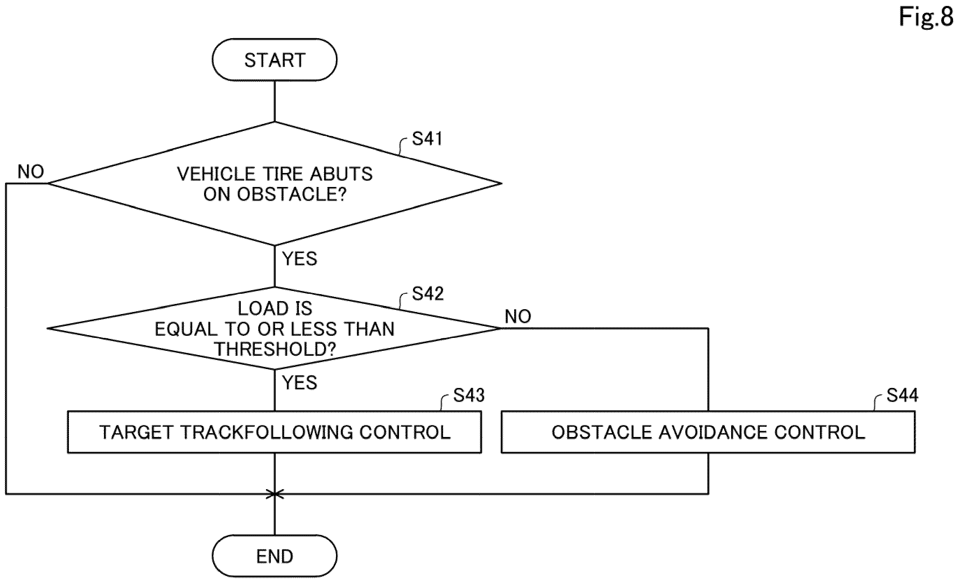

Fig. 8 is a flowchart showing a processing procedure of outside-guide-area control. The processor 201 determines whether the wheel WH of the vehicle 100 abuts on an obstacle in Step S41. When it is determined that the wheel WH of the vehicle 100 abuts on an obstacle (Step S41: YES), the processor 201 proceeds to Step S42. When it is determined that the wheel WH of the vehicle 100 does not abut on an obstacle (Step S41: NO), the processor 201 ends processing of this time.

In Step S42, the processor 201 determines whether the load that the vehicle 100 receives from an obstacle is equal to or less than a predetermined threshold value. The predetermined threshold value is determined in advance based on the specifications of the vehicle 100, the shape of the guide rail 41, or the like. The predetermined threshold value is larger, for example, as the degree of unevenness of the guide rail 41 is larger.

When it is determined that the load that the vehicle 100 receives from an obstacle is equal to or less than a predetermined threshold value (Step S42: YES), the processor 201 proceeds to Step S43. When it is determined that the load that the vehicle 100 receives from an obstacle is larger than a predetermined threshold value (Step S42: NO), the processor 201 proceeds to Step S44. In Step S43, the processor 201 executes target track following control. In Step S44, the processor 201 executes obstacle avoidance control. The obstacle avoidance control is executed by a known technology. The target track following control may be referred to as a first control, and the obstacle avoidance control may be referred to as a third control.

According to the system 10 of the present embodiment described above,, when the position judging unit 220 determines that the vehicle 100 is located at the guide area 30 and the abutment judging unit 230 determines that the wheel WH of the vehicle 100 abuts on an obstacle, the remote controller 210 executes guide following control using the obstacle as the guide rail 41. As a result, even when the information regarding the guide rail 41 included in the guide area 30 is simplified (for example, when there is no detailed information on the shape or the like of the guide rail 41), guide following control can be executed based on the result of the judgment as to whether the wheel WH of the vehicle 100 abuts on an obstacle when the vehicle 100 is located at the guide area 30. Thus, according to the system 10, guide following control can be appropriately executed. Further, according to the system 10, the location of the vehicle 100 can be controlled more accurately.

The system 10 includes the direction judging unit 240 that determines the guiding direction D of the guide rail 41 based on the direction of the load applied from the guide rail 41 to the wheel WH of the vehicle 100. The remote controller 210 causes the vehicle 100 to travel along the guiding direction D. As a result, even when the information on the guide rail 41 included in the guide area 30 is simplified, guide following control can be appropriately executed.

When the guiding direction D is different from the target track 21, the remote controller 210 corrects the target track 21 to follow the guiding direction D. This enables execution of more appropriate guide following control.

The position judging unit 220 may determine whether the vehicle 100 is located at the guide area 30 from the recognition result of the signboard 51 or the road marking 52 based on the image taken by the front-facing camera 130 of the vehicle 100. This allows an easily determination as to whether the vehicle 100 is located at the guide area 30 and an appropriate execution of guide following control.

### B. Second Embodiment

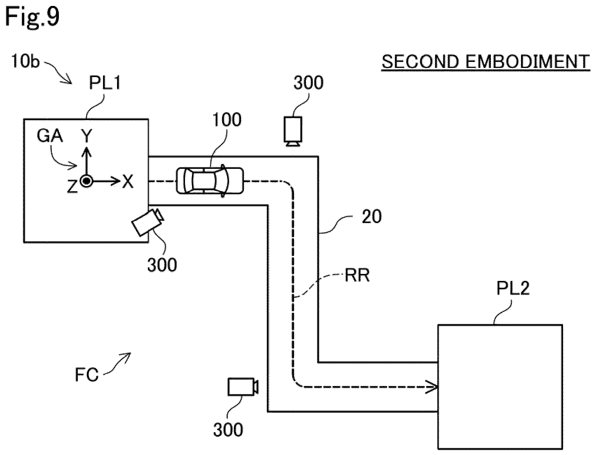

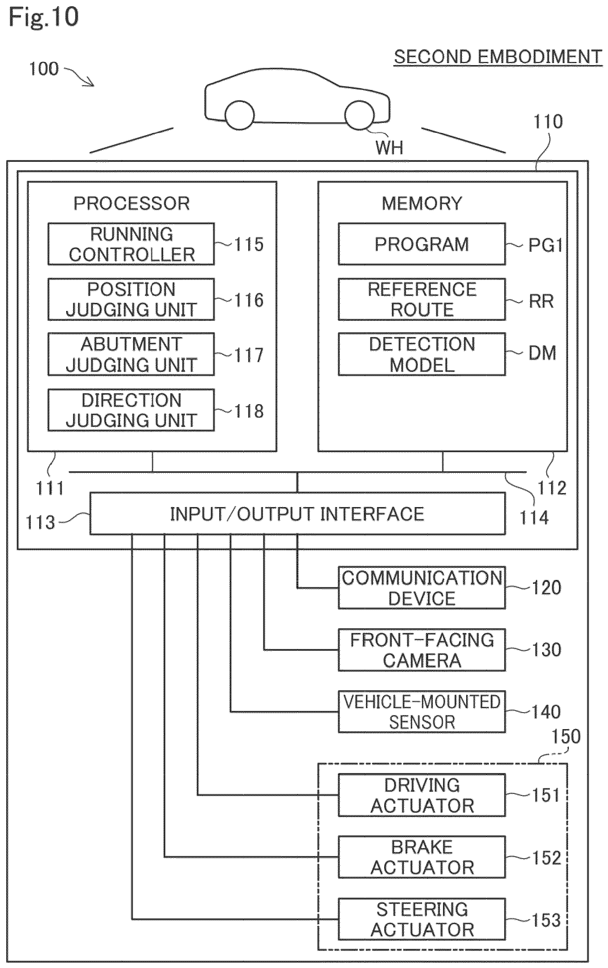

Fig. 9 is a conceptual view showing the configuration of a system 10b according to a second embodiment. Fig. 10 is an explanatory view showing the configuration of the vehicle 100. The system 10b of the present embodiment differs from the first embodiment in that the system 10b does not include the server 200 and the vehicle 100 runs by autonomous control by the vehicle 100. Unless otherwise specified, the other configurations are the same as that of the first embodiment.

As shown in Fig. 10, in the present embodiment, the processor 111 of the ECU 110 executes the computer program PG1 stored in advance in the memory 112 to function as the running controller 115, a position judging unit 116, an abutment judging unit 117, and a direction judging unit 118. The running controller 115 is capable of causing the vehicle 100 to run by autonomous control by acquiring output result from the external sensor 300, generating a running control signal using the output result, and outputting the generated running control signal to get the actuator group 150 to work. In the present embodiment, the memory 112 contains a detection model DM and a reference route RR stored therein in advance in addition to the computer program PG1.

The position judging unit 116, the abutment judging unit 117, and the direction judging unit 118 fulfill functions same as those of the position judging unit 220, the abutment judging unit 230, and the direction judging unit 240 shown in Fig. 4 respectively. Specifically, the position judging unit 116 judges whether the vehicle 100 is present at the guide area 30. The abutment judging unit 117 judges whether the wheel WH of the vehicle 100 abuts on an obstacle. The direction judging unit 118 judges the guiding direction D defined by the guide rail 41 on the basis of a direction of a load from the guide rail 41 received by the wheel WH of the vehicle 100.

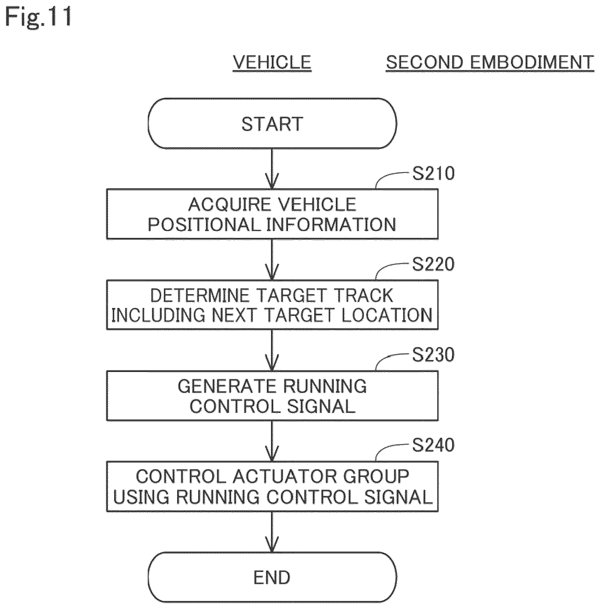

Fig. 11 is a flowchart showing a processing procedure of running control over the vehicle 100 according to the second embodiment. According to the processing procedure in Fig. 11, the processor 111 of the vehicle 100 executes the computer program PG1 to function as the running controller 115. In step S210, the running controller 115 acquires vehicle positional information using detection result output from a camera as the external sensor 300. In step S220, the running controller 115 determines a target location to which the vehicle 100 is to move next. In step S230, the running controller 115 generates a running control signal for causing the vehicle 100 to run toward the determined target location. In step S240, the running controller 115 controls the actuator group 150 using the generated running control signal, thereby causing the vehicle 100 to run according to a parameter indicated by the running control signal. The running controller 115 repeats acquisition of vehicle positional information, determination of a target location, generation of a running control signal, and control over the actuator in a predetermined cycle.

In the present embodiment, the ECU 110 of the vehicle 100 performs the processes shown in Figs. 6 to 8. Thus, as shown in Fig. 6, if the vehicle 100 is driving automatically and if the position judging unit 116 judges that the vehicle 100 is present at the guide area 30, the within-guide-area control is performed. If the vehicle 100 is driving automatically and if the position judging unit 116 does not judge that the vehicle 100 is present at the guide area 30, the outside-guide-area control is performed. As shown in Fig. 7, according to the within-guide-area control, the guide following control is performed if the abutment judging unit 117 judges that the wheel WH of the vehicle 100 abuts on an obstacle. According to the within-guide-area control, the target track following control is performed if the abutment judging unit 117 does not judge that the wheel WH of the vehicle 100 abuts on the obstacle. As shown in Fig. 8, according to the outside-guide-area control, the target track following control is performed if the abutment judging unit 117 judges that the wheel WH of the vehicle 100 abuts on the obstacle and judges that a load applied to the wheel WH is equal to or less than a threshold. According to the outside-guide-area control, the obstacle avoidance control is performed if the abutment judging unit 117 judges that the wheel WH of the vehicle 100 abuts on the obstacle and does not judge that the load applied to the wheel WH is equal to or less than the threshold.

Like in the first embodiment, according to the system 10b of the present embodiment described above, it is possible to cause the vehicle 100 to run in such a manner as to follow the guide rail 41. In particular, in the present embodiment, it is possible to cause the vehicle 100 to run by autonomous control by the vehicle 100 in such a manner as to follow the guide rail 41 in the absence of remote control over the vehicle 100 by the server 200.

### C. Other Embodiments

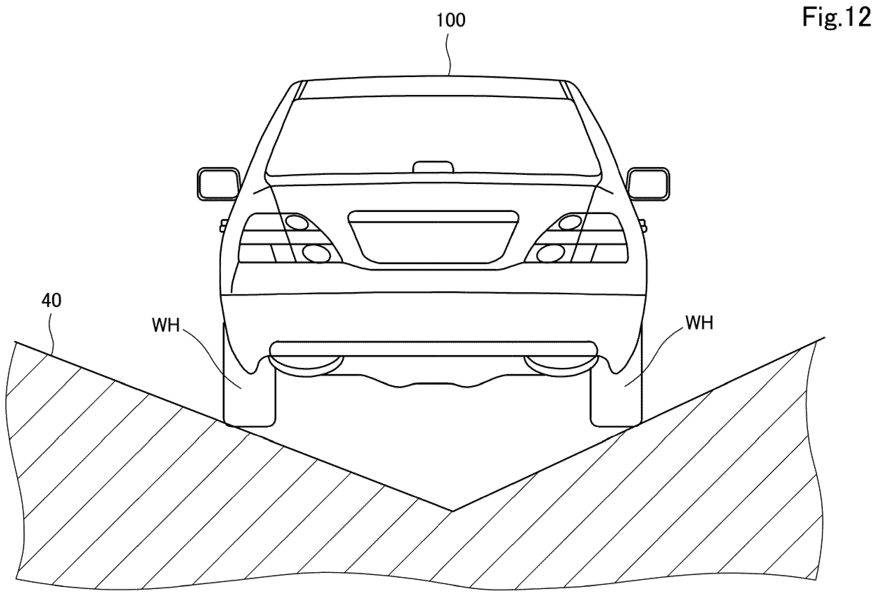

(C1) Fig. 12 is an explanatory view showing the configuration of a guiding section 40 according to another embodiment. As shown in Fig. 12, the guide rail 41 may be a recess part formed on a road surface and extending in a direction in which the vehicle 100 is intended to be guided. The guide rail 41 has a section formed into a V shape, for example. In this case, the remote controller 210 shown in Fig. 4 or the running controller 115 shown in Fig. 10 may control a steering angle in such a manner that reaction force from the road surface estimated from a steering torque or a lateral acceleration of the vehicle 100 detected by the vehicle-mounted sensor 140 becomes substantially zero. By doing so, it becomes possible to align a lateral position of the vehicle 100 correctly with the guide rail 41.

(C2) In the above-described second embodiment, the function of the guide following control by the running controller 115 may be turned off when the vehicle 100 is shipped from the factory site 90. By doing so, the guide following control is performed only when the vehicle 100 is present in the factory site 90, making it possible to reduce implementation of erroneous running control when the vehicle 100 is on a public road.

(C3) In each of the above-described embodiments, at least one of the signboard 51 and the road marking 52 may be omitted from the factory site 90.

(C4) In each of the above-described embodiments, the guide hole 42 may be omitted from the guiding section 40.

(C5) In the above-described first embodiment, the system 10 may not have to include the direction judging unit 240 and the remote controller 210 may not have to correct the target track 21. In the above-described second embodiment, the system 10b may not have to include the direction judging unit 118 and the running controller 115 may not have to correct the target track 21.

(C6) In each of the above-described embodiments, the external sensor 300 is a camera. By contrast, the external sensor 300 may not have to be a camera but may be LiDAR (light detection and ranging), for example. In this case, detection result output from the external sensor 300 may be three-dimensional point cloud data expressing the vehicle 100. In this case, the server 200 or the vehicle 100 may acquire vehicle positional information by conducting template matching using the three-dimensional point cloud data as the detection result and reference point cloud data prepared in advance.

(C7) In each of the above-described embodiments, the position judging unit 220, 116 judges whether the vehicle 100 is present at the guide area 30 using vehicle positional information acquired using the external sensor 300 and using guide area information showing a range of the guide area 30. By contrast, the position judging unit 220, 116 may recognize the signboard 51 or the road marking 52 using the front-facing camera 130 mounted on the vehicle 100 and may judge whether the vehicle 100 is present at the guide area 30 on the basis of result of the recognition. If LiDAR is mounted on the vehicle 100, the position judging unit 220, 116 may recognize the signboard 51 or the road marking 52 using the LiDAR and may judge whether the vehicle 100 is present at the guide area 30 on the basis of result of the recognition. The position judging unit 220, 116 may judge whether the vehicle 100 is present at the guide area 30 using a captured image output from a camera as the external sensor 300. If the external sensor 300 is LiDAR, the position judging unit 220, 116 may judge whether the vehicle 100 is present at the guide area 30 using three-dimensional point cloud data output from the LiDAR as the external sensor 300. If the memory 202, 112 stores in advance an identification number therein which indicates an external sensor 300 monitoring the guide area 30 out of the plurality of external sensors 300 installed on the factory site 90, the position judging unit 220, 116 may judge that the vehicle 100 is present at the guide area 30 if the vehicle 100 is detected by the external sensor 300 to monitor the guide area 30.

(C8) In each of the above-described embodiments, the abutment judging unit 230, 117 judges whether the wheel WH of the vehicle 100 abuts on the guide rail 41 using detection result from the vehicle-mounted sensor 140 mounted on the vehicle 100. By contrast, the abutment judging unit 230, 117 may judge whether the wheel WH of the vehicle 100 abuts on the guide rail 41 using detection result from the external sensor 300. As an example, the abutment judging unit 230, 117 may detect the wheel WH and the guide rail 41 in an image captured by a camera as the external sensor 300, and may judge whether the wheel WH and the guide rail 41 abut on each other on the basis of a positional relationship between the wheel WH and the guide rail 41.

(C9) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 150 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 150 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(C10) In the above-described second embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(C11) In each of the above-described embodiments, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 150 using the generated running control signal. In this case, the vehicle 100 is capable of running without using any detection result from an external sensor 300. The vehicle 100 may acquire target arrival time or traffic congestion information from outside the vehicle 100 and reflect the target arrival time or traffic congestion information in at least one of the route and the running control signal. The functional configuration of the system 10, 10b may be entirely provided at the vehicle 100. Specifically, the processes realized by the system 10, 10b in the present disclosure may be realized by the vehicle 100 alone.

(C12) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(C13) In each of the above-described embodiments, the vehicle 100 is simply required to have a configuration to become movable by unmanned driving. The vehicle 100 may embodied as a platform having the following configuration, for example. More specifically, in order to fulfill three functions including "run," "turn," and "stop" by unmanned driving, the vehicle 100 is simply required to include at least the ECU 110 and the actuator group 150. In order for the vehicle 100 to acquire information from outside for unmanned driving, the vehicle 100 is simply required to include the communication device 120 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(C14) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(C15) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(C16) In each of the above-described embodiments, some or all of the functions and processing implemented in software may be implemented in hardware. Furthermore, some or all of the functions and processing implemented in hardware may be implemented in software. As hardware for implementing the various functions in each of the above embodiments, various circuits such as integrated circuits and discrete circuits may be used.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

### REFERENCE SIGNS LIST

10, 10b ... System, 20 ... Road, 21 ... Target track, 21a ... Deviating region, 21b ... Corrected region, 30 ... Guide area, 40 ... Guiding section, 41 ... Guide rail, 41a ... Oblique section, 41b ... Parallel section, 42 ... Guide hole, 51 ... Signboard, 52 ... Road marking, 90 ... Factory site, 100 ... Vehicle, 111 ... Processor, 112 ... Memory, 113 ... Input/output interface, 114 ... Internal bus, 115 ... Running controller, 116 ... Position judging unit, 117 ... Abutment judging unit, 118 ... Direction judging unit, 120 ... Communication device, 130 ... Front-facing camera, 140 ... Vehicle-mounted sensor, 150 ... Actuator group, 151 ... Driving actuator, 152 ... Brake actuator, 153 ... Steering actuator, 200 ... Server, 201 ... Processor, 202 ... Memory, 203 ... Input/output interface, 204 ... Internal bus, 205 ... Communication device, 210 ... Remote controller, 220 ... Position judging unit, 230 ... Abutment judging unit, 240 ... Direction judging unit, 300 ... External sensor

## Claims

1. A system (10;10b) comprising:
a position judging unit (220;116) configured to make a judgment whether a vehicle (100) is present at a guide area (30) including a guide (41) having a recess-projection structure provided on a road surface, wherein the position judging unit is configured to judge that the vehicle is not present at the guide area and to judge that the vehicle is present at the guide area;
an abutment judging unit (230;117) configured to make a judgment whether a wheel of the vehicle abuts on an obstacle using detection result from a vehicle-mounted sensor (140) mounted on the vehicle or using detection result from an external sensor (300) located external to the vehicle;
a direction judging unit (240;118) configured to judge a guiding direction (D) defined by the guide on the basis of a direction of a load from the guide received by the wheel of the vehicle; and
a controller (210;115) configured to control running of the vehicle in response to result of the judgment by the position judging unit and result of the judgment by the abutment judging unit, the system arranged so that
when the position judging unit judges that the vehicle is not present at the guide area and the abutment judging unit judges that the wheel of the vehicle abuts on the obstacle, the controller performs first control for causing the vehicle to travel over the obstacle in such a manner as to follow a target track (21), and
when the position judging unit judges that the vehicle is present at the guide area and the abutment judging unit judges that the wheel of the vehicle abuts on the obstacle, the controller performs second control for causing the vehicle to run in such a manner as to use the obstacle as the guide and to travel along the guiding direction of the guide determined by the direction judging unit.

2. The system according to claim 1, the system arranged so that
the position judging unit judges whether the vehicle is present at the guide area using recognition result about a signboard corresponding to the guide area or a road marking corresponding to the guide area on the basis of an image captured by a front-facing camera of the vehicle.

3. A server comprising:
a position judging unit (220;116) configured to make a judgment whether a vehicle (100) is present at a guide area (30) including a guide (41) having a recess-projection structure provided on a road surface, wherein the position judging unit is configured to judge that the vehicle is not present at the guide area and to judge that the vehicle is present at the guide area;
an abutment judging unit (230;117) configured to make a judgment whether a wheel of the vehicle abuts on an obstacle using detection result from a vehicle-mounted sensor (140) mounted on the vehicle or using detection result from an external sensor (300) located external to the vehicle;
a direction judging unit (240;118) configured to judge a guiding direction (D) defined by the guide on the basis of a direction of a load from the guide received by the wheel of the vehicle; and
a remote controller (210;115) configured to remote control running of the vehicle in response to result of the judgment by the position judging unit and result of the judgment by the abutment judging unit, the server arranged so that
when the position judging unit judges that the vehicle is not present at the guide area and the abutment judging unit judges that the wheel of the vehicle abuts on the obstacle, the remote controller performs first control for causing the vehicle to travel over the obstacle in such a manner as to follow a target track (21), and
when the position judging unit judges that the vehicle is present at the guide area and the abutment judging unit judges that the wheel of the vehicle abuts on the obstacle, the remote controller performs second control for causing the vehicle to run in such a manner as to use the obstacle as the guide and to travel along the guiding direction of the guide determined by the direction judging unit.

4. A vehicle comprising:
a position judging unit (220;116) configured to make a judgment whether the vehicle (100) is present at a guide area (30) including a guide (41) having a recess-projection structure provided on a road surface, wherein the position judging unit is configured to judge that the vehicle is not present at the guide area and to judge that the vehicle is present at the guide area;
an abutment judging unit (230;117) configured to make a judgment whether a wheel of the vehicle abuts on an obstacle using detection result from a vehicle-mounted sensor (140) mounted on the vehicle or using detection result from an external sensor (300) located external to the vehicle;
a direction judging unit (240;118) configured to judge a guiding direction (D) defined by the guide on the basis of a direction of a load from the guide received by the wheel of the vehicle; and
a running controller (210;115) configured to control running of the vehicle in response to result of the judgment by the position judging unit and result of the judgment by the abutment judging unit, the vehicle arranged so that
when the position judging unit judges that the vehicle is not present at the guide area and the abutment judging unit judges that the wheel of the vehicle abuts on the obstacle, the running controller performs first control for causing the vehicle to travel over the obstacle in such a manner as to follow a target track (21), and
when the position judging unit judges that the vehicle is present at the guide area and the abutment judging unit judges that the wheel of the vehicle abuts on the obstacle, the running controller performs second control for causing the vehicle to run in such a manner as to use the obstacle as the guide and to travel along the guiding direction of the guide determined by the direction judging unit.

5. A method comprising:
a position judging step of making a judgment whether a vehicle (100) is present at a guide area (30) including a guide (41) having a recess-projection structure provided on a road surface and making a judgement whether the vehicle is not present at the guide area;
an abutment judging step of making a judgment whether a wheel of the vehicle abuts on an obstacle using detection result from a vehicle-mounted sensor (140) mounted on the vehicle or using detection result from an external sensor (300) located external to the vehicle;
a direction judging step of making a judgment of a guiding direction (D) defined by the guide on the basis of a direction of a load from the guide received by the wheel of the vehicle; and
a controlling step of controlling running of the vehicle in response to result of the judgment by the position judging step and result of the judgment by the abutment judging step, wherein
if the vehicle is judged not to be present at the guide area in the position judging step and the wheel of the vehicle is judged to abut on the obstacle in the abutment judging step, first control is performed in the controlling step for causing the vehicle to travel over the obstacle in such a manner as to follow a target track (21), and
if the vehicle is judged to be present at the guide area in the position judging step and the wheel of the vehicle is judged to abut on the obstacle in the abutment judging step, second control is performed in the controlling step for causing the vehicle to run in such a manner as to use the obstacle as the guide and to travel along the guiding direction of the guide determined by the direction judging unit.

## Patentansprüche

1. System (10; 10b), das umfasst:
eine Positionsbeurteilungseinheit (220; 116), die so konfiguriert ist, dass sie beurteilt, ob sich ein Fahrzeug (100) in einem Führungsbereich befindet (30), der eine Führung (41) enthält, die eine auf einer Fahrbahnoberfläche vorgesehene Vertiefungsvorsprungstruktur aufweist, wobei die Positionsbeurteilungseinheit so konfiguriert ist, dass sie beurteilt, ob sich das Fahrzeug nicht im Führungsbereich befindet, und dass sie beurteilt, ob sich das Fahrzeug im Führungsbereich befindet;
eine Anstoß-Beurteilungs-Einheit (230; 117), die so konfiguriert ist, dass sie beurteilt, ob ein Rad des Fahrzeugs an einem Hindernis anstößt, unter Verwendung eines Erfassungsergebnisses eines am Fahrzeug angebrachten Sensors (140) oder unter Verwendung eines Erfassungsergebnisses eines externen Sensors (300), der sich außerhalb des Fahrzeugs befindet;
eine Richtungsbeurteilungseinheit (240; 118), so die konfiguriert ist, dass sie eine Führungsrichtung (D) beurteilt, die durch die Führung definiert wird, basierend auf einer Richtung einer von der Führung ausgehenden Belastung, die vom Rad des Fahrzeugs aufgenommen wird, beurteilt; und
eine Steuerung (210; 115), die so konfiguriert ist, dass sie den Fahrbetrieb des Fahrzeugs als Reaktion auf das Ergebnis der Beurteilung durch die Positionsbeurteilungseinheit und das Ergebnis der Beurteilung durch die Anstoßbeurteilungseinheit steuert, wobei das System so ausgelegt ist, dass
wenn die Positionsbeurteilungseinheit beurteilt, dass sich das Fahrzeug nicht im Führungsbereich befindet, und die Anstoßbeurteilungseinheit beurteilt, dass das Rad des Fahrzeugs an das Hindernis anstößt, die Steuerung eine erste Steuerung durchführt, um das Fahrzeug dazu zu veranlassen, über das Hindernis hinwegzufahren, und zwar so, dass es einer Zielspur (21) folgt, und
wenn die Positionsbeurteilungseinheit beurteilt, dass sich das Fahrzeug im Führungsbereich befindet, und die Anstoßbeurteilungseinheit beurteilt, dass das Rad des Fahrzeugs an das Hindernis anstößt, die Steuerung eine zweite Steuerung durchführt, um das Fahrzeug so fahren zu lassen, dass es das Hindernis als Führung nutzt und entlang der von der Richtungsbeurteilungseinheit bestimmten Führungsrichtung der Führung fährt.

2. System nach Anspruch 1, wobei das System so ausgelegt ist, dass die Positionsbeurteilungseinheit beurteilt, ob sich das Fahrzeug im Führungsbereich befindet, unter Verwendung eines Erkennungsergebnisses bezüglich eines dem Führungsbereich entsprechenden Schildes oder einer dem Führungsbereich entsprechenden Straßenmarkierung basierend auf einem Bild, das von einer nach vorne gerichteten Kamera des Fahrzeugs aufgenommen wird.

3. Server, der umfasst:
eine Positionsbeurteilungseinheit (220; 116), die so konfiguriert ist, dass sie beurteilt, ob sich ein Fahrzeug (100) in einem Führungsbereich befindet (30), der eine Führung (41) enthält, die eine auf einer Fahrbahnoberfläche vorgesehene Vertiefungsvorsprungstruktur aufweist, wobei die Positionsbeurteilungseinheit so konfiguriert ist, dass sie beurteilt, ob sich das Fahrzeug nicht im Führungsbereich befindet, und dass sie beurteilt, ob sich das Fahrzeug im Führungsbereich befindet;
eine Anstoßbeurteilungseinheit (230; 117), die so konfiguriert ist, dass sie beurteilt, ob ein Rad des Fahrzeugs an einem Hindernis anstößt, unter Verwendung eines Erfassungsergebnisses eines am Fahrzeug angebrachten Sensors (140) oder unter Verwendung eines Erfassungsergebnisses eines externen Sensors (300), der sich außerhalb des Fahrzeugs befindet;
eine Richtungsbeurteilungseinheit (240; 118), so die konfiguriert ist, dass sie eine Führungsrichtung (D) beurteilt, die durch die Führung definiert wird, basierend auf einer Richtung einer von der Führung ausgehenden Belastung, die vom Rad des Fahrzeugs aufgenommen wird, beurteilt; und
eine Fernsteuerung (210; 115), die so konfiguriert ist, dass sie den Fahrbetrieb des Fahrzeugs als Reaktion auf das Ergebnis der Beurteilung durch die Positionsbeurteilungseinheit und das Ergebnis der Beurteilung durch die Anstoßbeurteilungseinheit fernsteuert, wobei der Server so ausgelegt ist, dass
wenn die Positionsbeurteilungseinheit beurteilt, dass sich das Fahrzeug nicht im Führungsbereich befindet, und die Anstoßbeurteilungseinheit beurteilt, dass das Rad des Fahrzeugs an das Hindernis anstößt, die Fernsteuerung eine erste Steuerung durchführt, um das Fahrzeug dazu zu veranlassen, über das Hindernis hinwegzufahren, und zwar so, dass es einer Zielspur (21) folgt, und
wenn die Positionsbeurteilungseinheit beurteilt, dass sich das Fahrzeug im Führungsbereich befindet, und die Anstoßbeurteilungseinheit beurteilt, dass das Rad des Fahrzeugs an das Hindernis anstößt, die Fernsteuerung eine zweite Steuerung durchführt, um das Fahrzeug so fahren zu lassen, dass es das Hindernis als Führung nutzt und entlang der von der Richtungsbeurteilungseinheit bestimmten Führungsrichtung der Führung fährt.

4. Fahrzeug, das umfasst:
eine Positionsbeurteilungseinheit (220; 116), die so konfiguriert ist, dass sie beurteilt, ob sich das Fahrzeug (100) in einem Führungsbereich befindet (30), der eine Führung (41) enthält, die eine auf einer Fahrbahnoberfläche vorgesehene Vertiefungsvorsprungstruktur aufweist, wobei die Positionsbeurteilungseinheit so konfiguriert ist, dass sie beurteilt, ob sich das Fahrzeug nicht im Führungsbereich befindet, und dass sie beurteilt, ob sich das Fahrzeug im Führungsbereich befindet;
eine Anstoßbeurteilungseinheit (230; 117), die so konfiguriert ist, dass sie beurteilt, ob ein Rad des Fahrzeugs an einem Hindernis anstößt, unter Verwendung eines Erfassungsergebnisses eines am Fahrzeug angebrachten Sensors (140) oder unter Verwendung eines Erfassungsergebnisses eines externen Sensors (300), der sich außerhalb des Fahrzeugs befindet;
eine Richtungsbeurteilungseinheit (240; 118), so die konfiguriert ist, dass sie eine Führungsrichtung (D) beurteilt, die durch die Führung definiert wird, basierend auf einer Richtung einer von der Führung ausgehenden Belastung, die vom Rad des Fahrzeugs aufgenommen wird, beurteilt; und
eine Fahrsteuerung (210; 115), die so konfiguriert ist, dass sie den Fahrbetrieb des Fahrzeugs als Reaktion auf das Ergebnis der Beurteilung durch die Positionsbeurteilungseinheit und das Ergebnis der Beurteilung durch die Anstoßbeurteilungseinheit steuert, wobei das Fahrzeug so ausgelegt ist, dass
wenn die Positionsbeurteilungseinheit beurteilt, dass sich das Fahrzeug nicht im Führungsbereich befindet, und die Anstoßbeurteilungseinheit beurteilt, dass das Rad des Fahrzeugs an das Hindernis anstößt, die Fahrsteuerung eine erste Steuerung durchführt, um das Fahrzeug dazu zu veranlassen, über das Hindernis hinwegzufahren, und zwar so, dass es einer Zielspur (21) folgt, und
wenn die Positionsbeurteilungseinheit beurteilt, dass sich das Fahrzeug im Führungsbereich befindet, und die Anstoßbeurteilungseinheit beurteilt, dass das Rad des Fahrzeugs an das Hindernis anstößt, die Fahrsteuerung eine zweite Steuerung durchführt, um das Fahrzeug so fahren zu lassen, dass es das Hindernis als Führung nutzt und entlang der von der Richtungsbeurteilungseinheit bestimmten Führungsrichtung der Führung fährt.

5. Verfahren, das umfasst:
einen Positionsbeurteilungsschritt, bei dem beurteilt wird, ob sich ein Fahrzeug (100) in einem Führungsbereich (30) befindet, der eine Führung (41) enthält, die eine auf einer Fahrbahnoberfläche vorgesehene Vertiefungsvorsprungstruktur aufweist, und bei dem beurteilt wird, ob sich das Fahrzeug nicht im Führungsbereich befindet;
einen Anstoßbeurteilungsschritt, bei dem beurteilt wird, ob ein Rad des Fahrzeugs an ein Hindernis anstößt, unter Verwendung eines Erfassungsergebnisses eines am Fahrzeug angebrachten Sensors (140) oder unter Verwendung eines Erfassungsergebnisses eines externen Sensors (300), der sich außerhalb des Fahrzeugs befindet;
einen Richtungsbeurteilungsschritt, bei dem eine durch die Führung definierte Führungsrichtung (D) beurteilt wird, basierend auf einer Richtung einer von der Führung ausgehenden Belastung, die vom Rad des Fahrzeugs aufgenommen wird, beurteilt; und
einen Steuerungsschritt zum Steuern der Fahrt des Fahrzeugs als Reaktion auf das Ergebnis der Beurteilung durch den Positionsbeurteilungsschritt und das Ergebnis der Beurteilung durch den Anstoßbeurteilungsschritt, wobei
wenn im Positionsbeurteilungsschritt beurteilt wird, dass sich das Fahrzeug nicht im Führungsbereich befindet, und im Anstoßbeurteilungsschritt beurteilt wird, dass das Rad des Fahrzeugs an das Hindernis anstößt, im Steuerungsschritt eine erste Steuerung durchgeführt wird, um das Fahrzeug so über das Hindernis fahren zu lassen, dass es einer Zielspur (21) folgt, und
wenn im Positionsbeurteilungsschritt beurteilt wird, dass sich das Fahrzeug im Führungsbereich befindet, und im Anstoßbeurteilungsschritt beurteilt wird, dass das Rad des Fahrzeugs an das Hindernis anstößt, im Steuerungsschritt eine zweite Steuerung durchgeführt wird, um das Fahrzeug so fahren zu lassen, dass es das Hindernis als Führung nutzt und entlang der von der Richtungsbeurteilungseinheit bestimmten Führungsrichtung der Führung fährt.

## Revendications

1. Système (10 ; 10b) comprenant :
une unité d'évaluation de position (220 ; 116) conçue pour évaluer si un véhicule (100) est présent au niveau d'une zone de guidage (30) présentant un guide (41) comprenant une structure relief-creux prévue sur une surface routière, ladite unité d'évaluation de position étant conçue pour évaluer que le véhicule n'est pas présent au niveau de la zone de guidage et pour évaluer que le véhicule est présent au niveau de la zone de guidage,
une unité d'évaluation de contact (230 ; 117) conçue pour évaluer si une roue du véhicule vient au contact d'un obstacle à l'aide du résultat de détection d'un capteur embarqué (140) monté sur le véhicule ou à l'aide du résultat de détection d'un capteur extérieur (300) situé à l'extérieur du véhicule,
une unité d'évaluation de direction (240 ; 118) conçue pour évaluer une direction de guidage (D) définie par le guide en fonction de la direction d'une charge exercée par le guide sur la roue du véhicule, et
un dispositif de commande (210 ; 115) conçu pour commander le fonctionnement du véhicule en réaction au résultat de l'évaluation menée par l'unité d'évaluation de position et au résultat de l'évaluation menée par l'unité d'évaluation de contact, le système étant agencé de telle façon que
lorsque l'unité d'évaluation de position évalue que le véhicule n'est pas présent au niveau de la zone de guidage et que l'unité d'évaluation de contact évalue que la roue du véhicule vient au contact d'un obstacle, le dispositif de commande effectue une première commande pour amener le véhicule à franchir l'obstacle en suivant une trajectoire cible (21), et
lorsque l'unité d'évaluation de position évalue que le véhicule est présent au niveau de la zone de guidage et que l'unité d'évaluation de contact évalue que la roue du véhicule vient au contact d'un obstacle, le dispositif de commande effectue une deuxième commande pour amener le véhicule à utiliser l'obstacle comme guide et à se déplacer selon la direction de guidage propre à ce guide, définie par l'unité d'évaluation de direction.

2. Système selon la revendication 1, le système étant agencé de telle façon que
l'unité d'évaluation de position évalue si le véhicule est présent dans la zone de guidage à l'aide d'un résultat de reconnaissance concernant un panneau indicateur correspondant à la zone de guidage ou un marquage routier correspondant à la zone de guidage en fonction d'une image prise par une caméra orientée vers l'avant du véhicule.

3. Serveur comprenant :
une unité d'évaluation de position (220 ; 116) conçue pour évaluer si un véhicule (100) est présent au niveau d'une zone de guidage (30) présentant un guide (41) comprenant une structure relief-creux prévue sur une surface routière, ladite unité d'évaluation de position étant conçue pour évaluer que le véhicule n'est pas présent au niveau de la zone de guidage et pour évaluer que le véhicule est présent au niveau de la zone de guidage,
une unité d'évaluation de contact (230 ; 117) conçue pour évaluer si une roue du véhicule vient au contact d'un obstacle à l'aide du résultat de détection d'un capteur embarqué (140) monté sur le véhicule ou à l'aide du résultat de détection d'un capteur extérieur (300) situé à l'extérieur du véhicule,
une unité d'évaluation de direction (240 ; 118) conçue pour évaluer une direction de guidage (D) définie par le guide en fonction de la direction d'une charge exercée par le guide sur la roue du véhicule, et
un dispositif de commande à distance (210 ; 115) conçu pour commander à distance le fonctionnement du véhicule en réaction au résultat de l'évaluation menée par l'unité d'évaluation de position et au résultat de l'évaluation menée par l'unité d'évaluation de contact, le serveur étant agencé de telle façon que
lorsque l'unité d'évaluation de position évalue que le véhicule n'est pas présent au niveau de la zone de guidage et que l'unité d'évaluation de contact évalue que la roue du véhicule vient au contact d'un obstacle, la télécommande effectue une première commande pour amener le véhicule à franchir l'obstacle en suivant une trajectoire cible (21), et
lorsque l'unité d'évaluation de position évalue que le véhicule est présent au niveau de la zone de guidage et que l'unité d'évaluation de contact évalue que la roue du véhicule vient au contact d'un obstacle, la télécommande effectue une deuxième commande pour amener le véhicule à utiliser l'obstacle comme guide et à se déplacer selon la direction de guidage propre à ce guide, définie par l'unité d'évaluation de direction.

4. Véhicule comprenant :
une unité d'évaluation de position (220 ; 116) conçue pour évaluer si le véhicule (100) est présent au niveau d'une zone de guidage (30) présentant un guide (41) comprenant une structure relief-creux prévue sur une surface routière, ladite unité d'évaluation de position étant conçue pour évaluer que le véhicule n'est pas présent au niveau de la zone de guidage et pour évaluer que le véhicule est présent au niveau de la zone de guidage,
une unité d'évaluation de contact (230 ; 117) conçue pour évaluer si une roue du véhicule vient au contact d'un obstacle à l'aide du résultat de détection d'un capteur embarqué (140) monté sur le véhicule ou à l'aide du résultat de détection d'un capteur extérieur (300) situé à l'extérieur du véhicule,
une unité d'évaluation de direction (240 ; 118) conçue pour évaluer une direction de guidage (D) définie par le guide en fonction de la direction d'une charge exercée par le guide sur la roue du véhicule, et
un dispositif de commande de fonctionnement (210 ; 115) conçu pour commander le fonctionnement du véhicule en réaction au résultat de l'évaluation menée par l'unité d'évaluation de position et au résultat de l'évaluation menée par l'unité d'évaluation de contact, le véhicule étant agencé de telle façon que
lorsque l'unité d'évaluation de position évalue que le véhicule n'est pas présent au niveau de la zone de guidage et que l'unité d'évaluation de contact évalue que la roue du véhicule vient au contact d'un obstacle, le dispositif de commande de fonctionnement effectue une première commande pour amener le véhicule à franchir l'obstacle en suivant une trajectoire cible (21), et
lorsque l'unité d'évaluation de position évalue que le véhicule est présent au niveau de la zone de guidage et que l'unité d'évaluation de contact évalue que la roue du véhicule vient au contact d'un obstacle, le dispositif de commande de fonctionnement effectue une deuxième commande pour amener le véhicule à utiliser l'obstacle comme guide et à se déplacer selon la direction de guidage propre à ce guide, définie par l'unité d'évaluation de direction.

5. Procédé comprenant :
une étape d'évaluation de position qui consiste à évaluer si un véhicule (100) est présent au niveau d'une zone de guidage (30) présentant un guide (41) comprenant une structure relief-creux prévue sur une surface routière et à évaluer si le véhicule est présent ou non au niveau de la zone de guidage,
une étape d'évaluation de contact qui consiste à évaluer si une roue du véhicule vient au contact d'un obstacle à l'aide du résultat de détection d'un capteur embarqué (140) monté sur le véhicule ou à l'aide du résultat de détection d'un capteur extérieur (300) situé à l'extérieur du véhicule,
une étape d'évaluation de direction qui consiste à évaluer une direction de guidage (D) définie par le guide en fonction de la direction d'une charge exercée par le guide sur la roue du véhicule, et
un étape de commande qui consiste à commander le fonctionnement du véhicule en réaction au résultat de l'évaluation menée par l'unité d'évaluation de position et au résultat de l'évaluation menée par l'unité d'évaluation de contact, étant entendu que
si, lors de l'étape d'évaluation de position, il est évalué que le véhicule n'est pas présent au niveau de la zone de guidage et que, lors de l'étape d'évaluation de contact, il est évalué que la roue du véhicule vient au contact d'un obstacle, une première commande est effectuée lors de l'étape de commande pour amener le véhicule à franchir l'obstacle en suivant une trajectoire cible (21), et
si, lors de l'étape d'évaluation de position, il est évalué que le véhicule est présent au niveau de la zone de guidage et que, lors de l'étape d'évaluation de contact, il est évalué que la roue du véhicule vient au contact d'un obstacle, une deuxième commande est effectuée lors de l'étape de commande pour amener le véhicule à utiliser l'obstacle comme guide et à se déplacer selon la direction de guidage propre à ce guide, définie par l'unité d'évaluation de direction.
